# EUROPÄISCHE PATENTSCHRIFT

(11) **EP 1 900 262 B1**
(45) Veröffentlichungstag und Bekanntmachung des Hinweises auf die Patenterteilung: **30.12.2009**
(21) Anmeldenummer: 06753295.2
(22) Anmeldetag: 30.06.2006
(51) Int. Cl.: H05B 41/292

(54) **VORRICHTUNG UND VERFAHREN ZUM BETREIBEN EINER HOCHDRUCKENTLADUNGSLAMPE**
DEVICE AND METHOD FOR OPERATING A HIGH-PRESSURE DISCHARGE LAMP
DISPOSITIF ET PROCEDE PERMETTANT DE FAIRE FONCTIONNER UNE LAMPE A DECHARGE HAUTE PRESSION

(30) Priorität: 06.07.2005 DE 102005031835
(43) Veröffentlichungstag der Anmeldung: 19.03.2008
(73) Patentinhaber: Osram Gesellschaft mit beschränkter Haftung, 81543 München (DE)
(72) Erfinder: BÖNIGK, Michael, 12437 Berlin (DE)
(86) Internationale Anmeldenummer: PCT/DE2006/001133
(87) Internationale Veröffentlichungsnummer: WO 2007/003171

(56) Entgegenhaltungen:
- EP-A- 1 458 010
- WO-A-2004/002200
- DE-A1- 4 301 184
- DE-A1- 4 410 177
- US-A1- 2004 085 027

## Beschreibung

Die Erfindung betrifft eine Vorrichtung zum Betreiben einer Hochdruckentladungslampe gemäß dem Oberbegriff des Patentanspruchs 1 und ein entsprechendes Betriebsverfahren.

### I. Stand der Technik

Eine derartige Vorrichtung ist beispielsweise auf den Seiten 217 und 218 in dem Buch "Betriebsgeräte und Schaltungen für elektrische Lampen" von C. H. Sturm und E. Klein, Siemens AG, 6. neubearbeitete Auflage 1992 beschrieben. Diese Textstelle offenbart den Betrieb einer Hochdruckentladungslampe mit einem bipolaren, im wesentlichen rechteckförmigen Versorgungsstrom mit Hilfe eines Vollbrückenwechselrichters, in dessen Brückenzweig die Hochdruckentladungslampe geschaltet ist.

Hochdruckentladungslampen benötigen für ihren ordnungsgemäßen Betrieb einen definierten energetischen Haushalt. Ist ihr Energiehaushalt gestört, so kommt es zu Veränderungen im Betriebsverhalten der Hochdruckentladungslampe, beispielsweise zu einer Verkürzung der Lampenlebensdauer aufgrund von Elektrodenerosion oder Flickern verursacht durch einen undefinierten Entladungsbogenansatz. Bei dem Betrieb der Hochdruckentladungslampe mit einem bipolaren Versorgungsstrom stellt der Nulldurchgang des Versorgungsstroms bei seinem Polaritätswechsel eine kritische Betriebsphase der Lampe dar. Insbesondere bei Hochdruckentladungslampen mit vergleichsweise dicken Elektroden, die eine hohe Wärmeleitfähigkeiten besitzen, wie zum Beispiel bei quecksilberfreien Halogen-Metalldampf-Hochdruckentladungslampen, bewirkt der erhöhte Wärmetransport während des Nulldurchgangs des Versorgungsstroms eine entsprechend stärkere Abkühlung der Lampenelektroden.

In diesem Fall kann die in die Hochdruckentladungslampe eingespeiste Leistung zu einer unzureichenden Aufheizung der Lampenelektroden vor dem Polaritätswechsel des Versorgungsstroms führen. Dementsprechend besitzen die Lampenelektroden eine verringerte Emissionsfähigkeit und die nach dem Polaritätswechsel verfügbare Spannung über dem Gesamtsystem, das heißt über dem Entladungsbogen und den Elektroden, reicht nicht aus, um den entsprechenden Stromfluss aufrecht zu erhalten bzw. schnellstmöglich bereitzustellen. An der Hochdruckentladungslampe lässt sich daher ein Flickern des Entladungsbogens beobachten. Dieses gilt insbesondere für stark gealterte Lampen. Um dieses Problem zu verringern wird gemäß der EP 1 176 855 A2 in die Hochdruckentladungslampe, zeitnah zu dem Nulldurchgang ihres Versorgungsstroms, ein zusätzlicher Strom oder eine zusätzliche elektrische Leistung in Form eines Strom- oder Leistungsimpulses eingekoppelt.

Die WO 2004/002200 A1 offenbart ein Verfahren zum Betreiben einer Entladungslampe mit einem Wechselstrom, dem ein Gleichstrom überlagert ist, um eine Temperaturdifferenz zwischen den Lampenelektroden zu kompensieren.

### I. Darstellung der Erfindung

Es ist Aufgabe der Erfindung, eine gattungsgemäße Vorrichtung und ein entsprechendes Verfahren zum Betreiben einer Hochdruckentladungslampe bereitzustellen, welche die Formung des zusätzlichen Strom- oder Leistungsimpulses in die Hochdntekentladungslampe ermöglicht.

Diese Aufgabe wird erfindungsgemäß durch die Merkmale des Patentanspruchs 1 bzw. 6 gelöst. Besonders vorteilhafte Ausführungen der Erfindung sind in den abhängigen Patentansprüchen beschrieben.

Die erfindungsgemäße Vorrichtung zum Betreiben einer Hochdruckentladungslampe mit einem biploaren Versorgungsstrom und einer Leistungsregelung umfasst einen Regler mit einer asymmetrischen Regelungskennlinie zur Formung eines zeitnah zu dem Nulldurchgang des Versorgungsstroms angeordneten Strom- oder Leistungsimpulses. Mit Hilfe des asymmetrischen Reglers wird zeitnah zu dem Nulldurchgang des Versorgungsstroms, vorzugsweise unmittelbar nach dem Nulldurchgang des Versorgungsstroms, ein Strom- oder Leistungsimpuls generiert, indem der Regler dem durch die Kommutierung bedingten Absinken der Versorgungsstromstärke bzw. der Leistung unter einen vorgegebenen Sollwert sofort gegensteuert, um die Versorgungsstromstärke bzw. die Leistung wieder zu erhöhen. Der Regler der erfindungsgemäßen Vorrichtung besitzt eine asymmetrische Reglerkennlinie, so dass er auf ein Unterschreiten des Sollwerts des Betrags der Versorgungsstromstärke empfindlicher reagiert als auf ein Überschreiten des vorgenannten Sollwerts. Mit anderen Worten formuliert, der Regler ist so ausgebildet, dass er auf ein Unterschreiten des vorgenannten Sollwerts mit einer vergleichsweise schnelleren oder stärkeren Gegensteuerung reagiert als im Fall eines Überschreitens dieses Sollwerts. Dadurch wird mittels des Reglers unmittelbar nach jedem Nulldurchgang des bipolaren Versorgungsstroms eine Leistungsüberhöhung in Form eines so genannten Kommutierungsimpulses generiert. Die Form dieses Kommutierungsimpulses kann durch eine geeignete Dimensionierung der elektronischen Bauteile des Reglers beeinflusst werden. Durch die vergleichsweise schnelle oder starke Gegensteuerung des Reglers im Fall des Unterschreitens des oben genannten Sollwerts wird ein Überschwingen verursacht, das den Anstieg und die Höhe des Kommutierungsimpulses nach dem Nulldurchgang des Versorgungsstroms bestimmt. Durch die vergleichsweise, träge Gegensteuerung des Reglers im Fall des Überschreitens des oben genannten Sollwerts wird bei der abfallenden Flanke des Kommutierungspulses das Auftreten von Oszillationen verhindert.

Der asymmetrische Regler ist vorteilhafterweise an die Leistungsregelungseinrichtung gekoppelt, die zur Regelung der Leistungsaufnahme der Hochdruckentladungslampe auf ein konstantes Niveau dient. Dadurch kann der asymmetrische Regler unmittelbar in die Leistungsregelung der Hochdruckentladungslampe eingreifen. Alternativ kann zur Regelung auch der Lampenstrom der Hochdruckentladungslampe herangezogen werden. Vorzugsweise wird die Leistungsregelung mittels einer Pulsweitenmodulation durchgeführt und der asymmetrische Reglers ist daher vorzugsweise an eine Pulsweitenmodulationssteuerung zur Leistungsregelung der Hochdruckentladungslampe gekoppelt.

Gemäß dem bevorzugten Ausführungsbeispiel der Erfindung umfasst die Vorrichtung einen Halb- oder Vollbrückenwechselrichter, in dessen Brückenzweig die Hochdruckentladungslampe geschaltet ist, um diese mit einem bipolaren Strom niedriger Frequenz von üblicherweise kleiner als 1000 Hertz zu versorgen.

Der Regler ist vorzugsweise entweder als asymmetrischer Proportional-Integral-Regler (PI-Regler) oder als asymmetrischer Integral-Regler (I-Regler) ausgebildet.

### III. Beschreibung der bevorzugten Ausführungsbeispiele

Nachstehend wird die Erfindung anhand von bevorzugten Ausführungsbeispielen näher erläutert. Es zeigen:

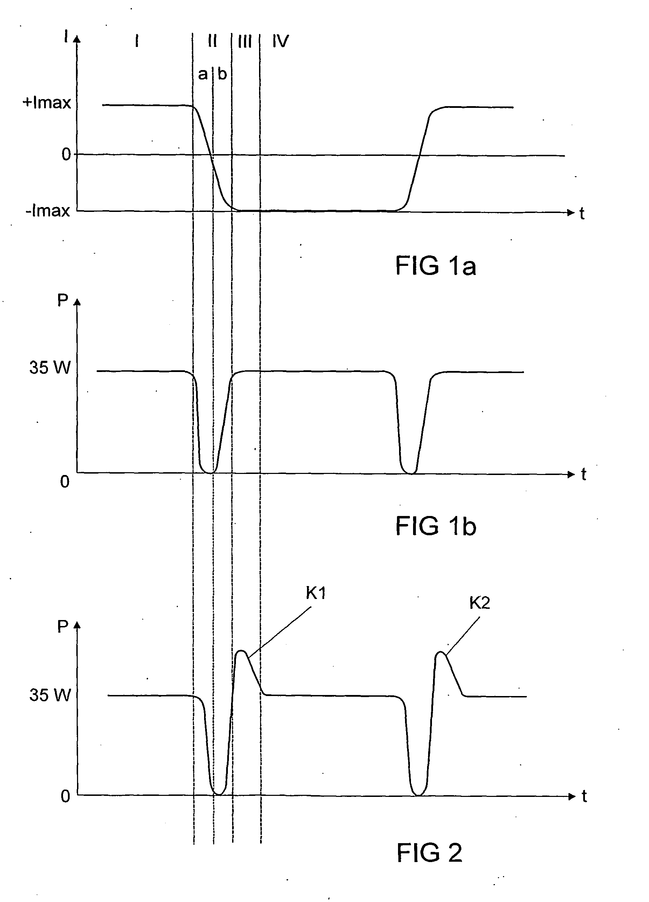

- Figur 1: a) Eine schematische Darstellung des zeitlichen Verlaufs des Versor- gungsstroms für die Hochdruckentladungslampe, ohne Regelung mittels des asymmetrischen Reglers
- Figur 1: b) Eine schematische Darstellung des zeitlichen Verlaufs der Leistungs- aufnahme der Hochdruckentladungslampe, ohne Regelung mittels des a- symmetrischen Reglers
- Figur 2: Eine schematische Darstellung des zeitlichen Verlaufs der momentanen Leistungsaufnahme der Hochdruckentladungslampe mit vom asymmetri- schen Regler geformten Kommutierungsimpulsen unmittelbar nach jedem Nulldurchgang des Versorgungsstroms
- Figur 3: Eine Schaltskizze eines asymmetrischen Reglers gemäß dem ersten Aus- führungsbeispiel der Erfindung
- Figur 4: Eine schematische Darstellung des zeitlichen Verlaufs einer Regelabwei- chung
- Figur 5: Eine schematische Darstellung der Antwort des Reglers gemäß der Figur 3 auf die Regelanweichung gemäß der Figur 4
- Figur 6: Eine Schaltskizze eines asymmetrischen Reglers gemäß dem zweiten Aus- führungsbeispiel der Erfindung
- Figur 7: Eine schematische Darstellung des zeitlichen Verlaufs einer Regelabwei- chung
- Figur 8: Eine schematische Darstellung der Antwort des Reglers gemäß der Figur 6 auf die Regelanweichung gemäß der Figur 7
- Figur 9: Eine Schaltskizze der Schaltungsanordnung zum Betrieb einer Hoch- druckentladungslampe gemäß dem bevorzugten Ausführungsbeispiel der Erfindung

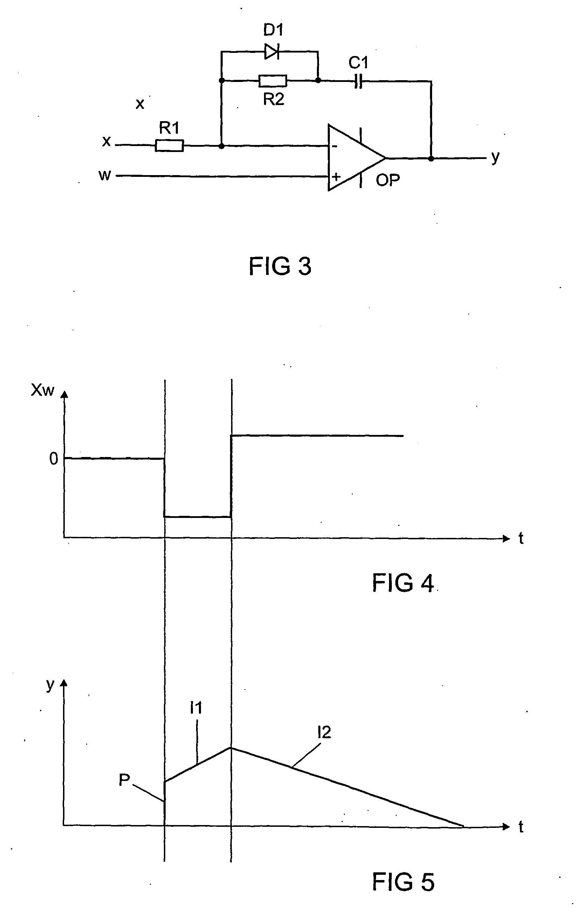

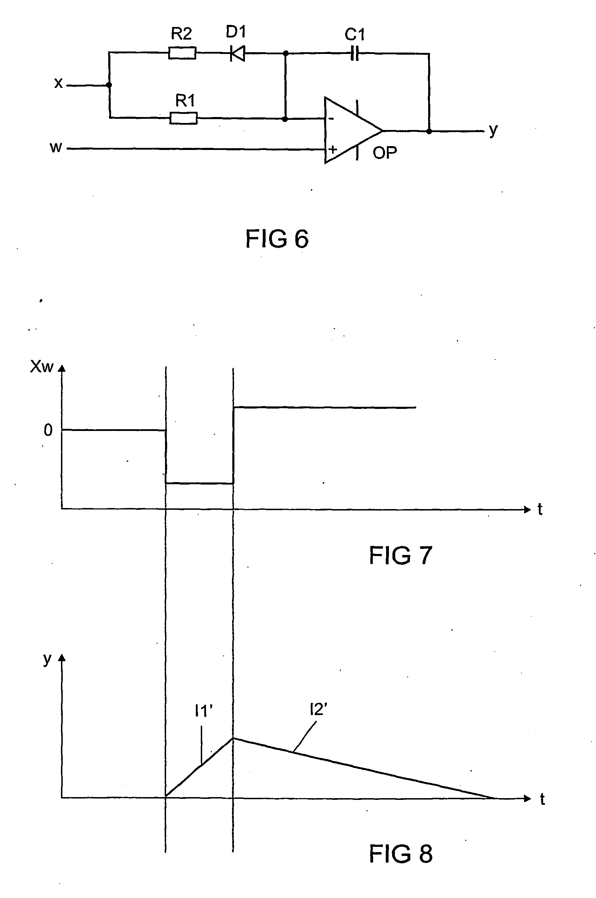

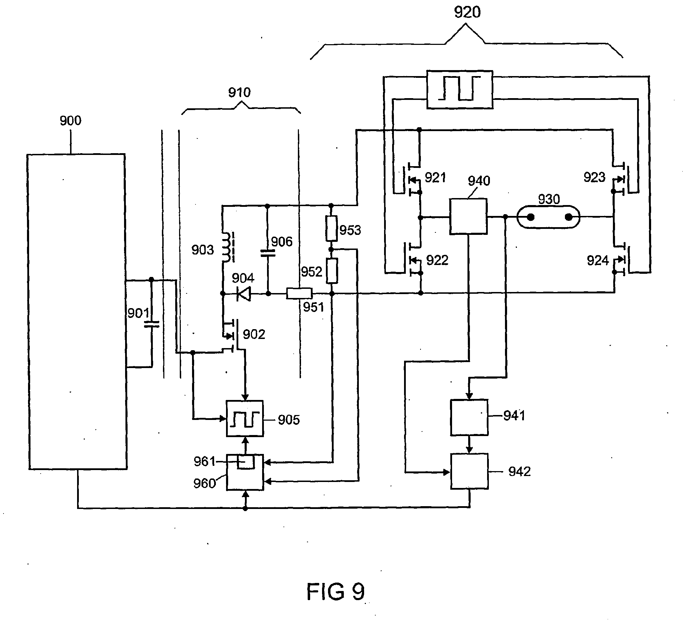

In Figur 9 ist schematisch der Aufbau einer Schaltungsanordnung zum Betrieb einer Hochdruckentladungslampe entsprechend den bevorzugten Ausführungsbeispielen der erfindungsgemäßen Vorrichtung dargestellt. Die Schaltungsanordnung umfasst einen Spannungswandler 900, an dessen Gleichspannungsausgang ein Speicherkondensator 901 angeschlossen ist. Der Speicherkondensator 901 dient als Gleichspannungsquelle für einen daran angeschlossenen Tiefsetzsteller 910, der den Transistor 902, die Induktivität 903, die Diode 904 und die Pulsweitenmodulationssteuerung 905 für den Transistor 902 sowie den Kondensator 906 umfasst. Am Kondensator 906 wird die Ausgangsgleichspannung des Tiefsetzstellers 910 bereitgestellt. Der Kondensator 906 dient als Spannungsquelle für den daran angeschlossenen Vollbrückenwechselrichter 920, der im wesentlichen von den Transistoren 921, 922, 923 und 924 gebildet wird. In den Brückenzweig des Vollbrückenwechselrichters 920 sind die Hochdruckentladungslampe 930 und das Zündgerät 940 für die Hochdruckentladungslampe 930 sowie die Zündüberwachungsschaltung 941 mit dem Zündzeitgeber 942 geschaltet. Die Widerstände 951, 952, 953 dienen zur Ermittlung der momentanen Leistungsaufnahme der Hochdruckentladungslampe 930. Die Messsignale von den Widerständen 951, 952, 953 werden der Leistungsregelungseinheit 960 zugeführt, die an ihrem Ausgang ein Steuerungssignal für die Pulsweitenmodulationssteuerung 905 des Transistors 902 erzeugt. Die Leistungsregelungseinheit 960 umfasst einen Regler 961 mit asymmetrischer Regelungskennlinie. Zwei unterschiedliche Ausführungsbeispiele des Reglers 961 sind in den Figuren 3 und 6 schematisch dargestellt. Der Regler 961 kann aber auch als Software in einem programmgesteuert arbeitenden Mikrocontroller zur Leistungsregelung der Hochdruckentladungslampe implementiert sein. Die Leistungsregelung der Hochdruckentladungslampe 930 erfolgt mittels der Leistungsregelungseinheit 960, des Reglers 961 und der Pulsweitenmodulationssteuerung 905 über ein Verändern der Ein- und Ausschaltdauer des Transistors 902 des Tiefsetzstellers 910. Die Schaltfrequenz des Transistors 902 und dementsprechend auch die von der Pulsweitenmodulationssteuerung 905 generierten Pulsweitenmodulationssignale besitzen eine Frequenz oberhalb von 20 kHz.

Bei der Hochdruckentladungslampe 930 handelt es sich gemäß der bevorzugten Ausführungsbeispiele um eine Halogen-Metalldampf-Hochdruckentladungslampe mit einer Nennleistung von 35 Watt, die als Lichtquelle für einen Kraftfahrzeugscheinwerfer vorgesehen ist. Die in Figur 9 abgebildete Schaltungsanordnung wird daher von der Bordnetzspannung des Kraftfahrzeugs gespeist.

Die Transistorpaare 921, 924 und 922, 923 des Vollbrückenwechselrichters 920 schalten alternierend mit einer Frequenz von 500 Hertz, so dass die Hochdruckentladungslampe 930 mit einem im wesentlichen rechteckförmigen, bipolaren Versorgungsstrom derselben Frequenz gespeist wird. In Figur 1a ist der zeitliche Verlauf eines im wesentlichen rechteckförmigen, bipolaren Versorgungsstroms anhand einer Halbwelle schematisch dargestellt. Die Figur 1b zeigt den zeitlichen Verlauf der Leistungsaufnahme der Hochdruckentladungslampe 930, der dem in Figur 1a dargestellten Stromverlauf entspricht. Ein derartiger Strom- bzw. Leistungsverlauf ist Stand der Technik. Mittels des asymmetrischen Reglers, der erfindungsgemäß als Bestandteil der Betriebsvorrichtung ausgebildet ist, werden in den Zeitintervallen III Stromimpulse erzeugt, die dem im wesentlichen rechteckförmigen, bipolaren Versorgungsstrom überlagert sind und unmittelbar nach jedem Nulldurchgang des Versorgungsstroms auftreten. Diese Stromimpulse befinden sich in Phase mit in den gleichen Zeitintervallen auftretenden Leistungsimpulsen K1, K2, die zu den Stromimpulsen korrespondieren. In der Figur 2 ist daher nur der zeitliche Verlauf der momentanen elektrischen Leistungsaufnahme der Hochdruckentladungslampe 930 dargestellt, der mittels der erfindungsgemäßen Vorrichtung erzeugt wird. Die zu den Leistungsimpulsen K1, K2 korrespondierenden Stromimpulse besitzen abwechselnd negative und positive Polarität und ihre maximale Stromstärke ist größer als die Amplitude Imax des rechteckförmigen Versorgungsstroms. Die Stromimpulse bzw. Leistungsimpulse (in Figur 2 dargestellt) werden auch als Kommutierungsimpulse K1, K2 bezeichnet. In den Zeitintervallen I und IV vor und nach den Nulldurchgängen des Versorgungsstroms befindet sich der Regler im eingeschwungenen Zustand. Die Hochdruckentladungslampe 930 wird während der Zeitintervalle I und IV nahe ihrer Nennleistung von 35 Watt betrieben. Die Impulsleistung der Kommutierungsimpulse K1, K2 und die Leistungsaufnahme während der Phasen I und IV ergeben über die gesamte Periode des Lampenstroms gemittelt einen Wert von 35 Watt.

Die Kommutierungsimpulse K1, K2 während der Zeitintervalle III werden mit Hilfe des asymmetrischen Reglers 961 erzeugt und geformt, der als Bestandteil der zur Regelung der Leistungsaufnahme der Hochdruckentladungslampe 930 dienenden Leistungsregelungseinheit 960 ausgebildet ist. Der Regler 961 arbeitet mit zwei unterschiedlichen Reglerkennlinien, wobei die erste Reglerkennlinie nur bei einer negativen Regelabweichung Xw, das heißt, beim Unterschreiten des Sollwerts der Leistungsaufnahme von 35 Watt, und die zweite Reglerkennlinie nur bei einer positiven Regelabweichung Xw, das heißt, beim Überschreiten des Sollwerts der Leistungsaufnahme von 35 Watt wirksam ist. Die Gegensteuerung des Reglers 961 mittels der zweiten Reglerkennlinie ist im Vergleich zu seiner Gegensteuerung mittels der ersten Reglerkennlinie langsamer bzw. träger ausgebildet. Der Regler 961 reagiert daher auf eine Überschreitung des Leistungssollwerts von 35 Watt mit einer schwächeren Gegensteuerung als auf eine Unterschreitung des vorgenannten Leistungssollwerts. Er ist somit asymmetrisch ausgebildet. Während der Zeitintervalle IIa, IIb (Figuren 1 und 2) ist die erste Reglerkennlinie des Reglers 961 wirksam und während der Zeitintervalle III ist die zweite Reglerkennlinie wirksam.

Sinkt im nicht-leitenden Zustand der Vollbrücke 920 der Versorgungsstrom zu Beginn der Zeitintervalle IIa, so dass die momentane Leistungsaufnahme der Hochdruckentladungslampe 930 unter den Sollwert von 35 Watt abfällt, so erfolgt mittels des asymmetrischen Reglers 961 eine sofortige Gegensteuerung. Der Regler 961 arbeitet als Proportional-Integral-Regler (PI-Regler) oder als Integral-Regler (I-Regler) mit seiner ersten Kennlinie. Da die getaktete Stromversorgung 910, 920 der Hochdruckentladungslampe 930 während der Zeitintervalle IIa aufgrund der nicht-leitenden Vollbrücke 920 auf eine Last gegen Null (d.h. ihr Widerstandswert geht gegen unendlich) arbeitet,erhöht sich die Spannung am Kondensator 906, weil sich die in der Induktivität 903 gespeicherte Energie während der Zeitintervalle IIa in den Kondensator 906 entlädt. Diese überhöhte Spannung steht während der Zeitintervalle IIb als treibende Spannung zur Verfügung, um einen steilen Anstieg der Stromstärke des Versorgungsstroms zu Beginn seiner negativen Halbwelle und eine Verkürzung der Kommutierungszeit des Versorgungsstroms sowie einen steilen Anstieg der Leistungsaufnahme (Figur 2) zu bewirken. In Verbindung mit der während der Zeitintervalle IIb wirkenden ersten Reglerkennlinie des Reglers 961 und der während der Zeitintervalle III wirkenden zweiten Reglerkennlinie des Reglers 961 kommt es während der Zeitintervalle III zu einem starken Überschwingen der Leistungsaufnahme und somit zur Entstehung der Leistungsimpulse K1, K2. Handelt es sich bei der Hochdruckentladungslampe 930 um eine alte Lampe, die vergleichsweise lange stromlose Phasen während der Kommutierung, d.h. während des Nulldurchgangs des Versorgungsstroms, ausbildet, so verstärkt sich der obige Effekt. Der Regler 961 versucht mit einer schnellen Gegensteuerung gemäß seiner ersten Reglerkennlinie die Leistungsaufnahme der Lampe weiter zu erhöhen. Das führt zu einer weiteren Erhöhung der treibenden Spannung am Kondensator 906 und zu einem stärkeren Überschwingen sowie zu höheren Kommutierungsimpulsen K1, K2.

In Figur 3 ist schematisch eine Schaltungsanordnung des asymmetrischen Reglers 961 gemäß dem ersten Ausführungsbeispiel abgebildet. Der Regler umfasst einen Operationsverstärker OP, zwei Widerstände R1, R2, eine Diode D1 und einen Kondensator C1. Die Regelgröße x wird über den Widerstand R1 dem invertierenden Eingang des Operationsverstärkers OP zugeführt. Dem nicht-invertierenden Eingang des Operationsverstärkers OP wird der Sollwert w zugeführt. Der Ausgang y des Operationsverstärkers OP ist über den Kondensator C1 und die in Serie zum Kondensator C1 geschaltete Parallelschaltung, bestehend aus der Diode D1 und dem Widerstand R2, zum invertierenden Eingang des Operationsverstärkers zurückgekoppelt. Dieser Regler ist als asymmetrischer Proportional-Integral-Regler (PI-Regler) ausgebildet. In Figur 5 ist die Antwort dieses Reglers auf die als Beispiel vorgegebene Regelabweichung Xw gemäß der Figur 4 schematisch dargestellt. Die Regelabweichung Xw berechnet sich als Differenz von Regelgröße x minus Sollwert w.

Bei negativer Regelabweichung Xw erzeugt der Regler einen der Amplitude der Regelabweichung Xw proportionalen Anteil P (Figur 5) der Stellgröße y und einen ersteh integralen Anteil I1 der Stellgröße y. Dieser Fall entspricht der oben erwähnten ersten Regelungskennlinie des Reglers 961. Im Fall einer positiven Regelabweichung Xw erzeugt der Regler einen zweiten integralen Anteil I2 der Stellgröße y. Dieser Fall entspricht der oben erwähnten zweiten Regelungskennlinie des Reglers 961. Je nach Vorzeichen der Regelabweichung Xw wird die Diode D1 in Durchlass- oder Sperrrichtung betrieben und dem entsprechend ist eine andere Zeitkonstante für das RC-Glied im Rückkopplungszweig zwischen Ausgang y und invertierendem Eingang des Operationsverstärkers OP und somit auch eine andere Regelungskennlinie wirksam.

In Figur 6 ist schematisch eine Schaltungsanordnung des asymmetrischen Reglers 961 gemäß dem zweiten Ausführungsbeispiel abgebildet. Der Regler umfasst einen Operationsverstärker OP, zwei Widerstände R1, R2, eine Diode D1 und einen Kondensator C1. Die Regelgröße x wird über die Parallelschaltung des Widerstands R1 mit der Serienschaltung von Widerstand R2 und Diode D1 dem invertierenden Eingang des Operationsverstärkers OP zugeführt. Dem nicht-invertierenden Eingang des Operationsverstärkers OP wird der Sollwert w zugeführt. Der Ausgang y des Operationsverstärkers OP ist über den Kondensator C1 zum invertierenden Eingang des Operationsverstärkers zurückgekoppelt. Dieser Regler ist als asymmetrischer Integral-Regler (I-Regler) ausgebildet. In Figur 8 ist die Antwort dieses Reglers auf die als Beispiel vorgegebene Regelabweichung Xw gemäß der Figur 7 schematisch dargestellt. Die Regelabweichung Xw berechnet sich als Differenz von Regelgröße x minus Sollwert w.

Bei negativer Regelabweichung Xw erzeugt der Regler einen ersten integralen Anteil I1' der Stellgröße y. Dieser Fall entspricht der oben erwähnten ersten Regelungskennlinie des Reglers 961. Im Fall einer positiven Regelabweichung Xw erzeugt der Regler einen zweiten integralen Anteil I2' der Stellgröße y. Dieser Fall entspricht der oben erwähnten zweiten Regelungskennlinie des Reglers 961. Je nach Vorzeichen der Regelabweichung Xw wird die Diode D1 in Durchlass- oder Sperrrichtung betrieben und dem entsprechend ist entweder die Parallelschaltung der Widerstände R1, R2 oder nur der Widerstand R1 für die Berechnung der Zeitkonstante des RC-Gliedes im Rückkopplungszweig zwischen Ausgang y und invertierendem Eingang des Operationsverstärkers OP heranzuziehen und somit ergeben sich auch zwei unterschiedliche Regelungskennlinien für den Regler, die je nach Vorzeichen der Regelabweichung Xw wirksam sind.

Die Erfindung beschränkt sich nicht auf die näher erläuterten Ausführungsbeispiele. Beispielsweise kann der asymmetrische Regler auch mittels eines Mikrocontrollers oder Mikroprozessors mit implementierter Software, ohne Verwendung analoger Bauteile, verwirklicht werden.

## Patentansprüche

1. Vorrichtung zum Betreiben einer Hochdruckentladungslampe (930) mit einem bipolaren Versorgungsstrom und einer geregelten Leistungsaufnahme, wobei die Vorrichtung einen Reglers zur Formung eines zeitnah zu dem Nulldurchgang des Versorgungsstroms angeordneten Strom- oder Leistungsimpulses (K1,K2) umfasst, **dadurch gekennzeichnet, dass** der Regler (961) eine asymmetrische Regelungskennlinie besitzt, so dass er auf ein Unterschreiten eines vorgegebenen Sollwerts des Betrags der Versorgungsstromstärke mit einer vergleichsweise schnelleren oder stärkeren Gegensteuerung reagiert als im Fall eines Überschreitens dieses Sollwerts.

2. Vorrichtung nach Anspruch 1, **dadurch gekennzeichnet, dass** der Regler (961) als asymmetrischer PI-Regler ausgebildet ist.

3. Vorrichtung nach Anspruch 1, **dadurch gekennzeichnet, dass** der Regler (961) als asymmetrischer I-Regler ausgebildet ist.

4. Vorrichtung nach Anspruch 1, **dadurch gekennzeichnet, dass** der asymmetrische Regler (961) an eine Pulsweitenmodulationssteuerung (905) zur Leistungsregelung der Hochdruckentladungslampe (930) gekoppelt ist.

5. Vorrichtung nach einem oder mehreren der vorstehenden Ansprüche, **dadurch gekennzeichnet, dass** die Vorrichtung einen Voll- oder Halbbrückenwechseirichter (920) umfasst, in dessen Brückenzweig die Hochdruckentladungslampe (930) geschaltet ist.

6. Verfahren zum Betreiben einer Hochdruckentladungslampe (930) mit einem bipolaren Versorgungsstrom und einer Regelung der Leistungsaufnahme, bei der zeitnah zu den Nulldurchgängen des Versorgungsstroms Strom- oder Leistungsimpulse (K1, K2) geformt werden, **dadurch gekennzeichnet, dass** die Regelung der Leistungsaufnahme mit Hilfe einer asymmetrischen Regelungskennlinie durchgeführt wird, so dass auf ein Unterschreiten eines vorgegebenen Sollwerts des Betrags der Versorgungsstromstärke mit einer vergleichsweise schnelleren oder stärkeren Gegensteuerung reagiert wird als im Fall eines Überschreitens dieses Sollwerts.

## Claims

1. Device for operating a high-pressure discharge lamp (930) using a bipolar supply current and a regulated power consumption, the device comprising a regulator for shaping a current or power pulse (K1, K2) arranged close to the zero crossing of the supply current in terms of time, **characterized in that** the regulator (961) has an asymmetric regulating characteristic curve, with the result that the regulator reacts to an undershooting of a predetermined desired value of the magnitude of the supply current intensity with a comparatively faster or greater counteractive control than in the case of an exceeding of this desired value.

2. Device according to Claim 1, **characterized in that** the regulator (961) is in the form of an asymmetric PI regulator.

3. Device according to Claim 1, **characterized in that** the regulator (961) is in the form of an asymmetric I regulator.

4. Device according to Claim 1, **characterized in that** the asymmetric regulator (961) is coupled to a pulse-width modulation controller (905) for regulating the power of the high-pressure discharge lamp (930).

5. Device according to one or more of the preceding claims, **characterized in that** the device comprises a full-bridge or half-bridge inverter (920), the high-pressure discharge lamp (930) being connected to the bridge path of said inverter.

6. Method for operating a high-pressure discharge lamp (930) using a bipolar supply current and a regulation of the power consumption, in which current or power pulses (K1, K2) are shaped close to the zero crossings of the supply current in terms of time, **characterized in that** the power consumption is regulated with the aid of an asymmetric regulating characteristic curve, with the result that an undershooting of a predetermined desired value of the magnitude of the supply current intensity is reacted to with a comparatively faster or greater counteractive control than in the case of an exceeding of this desired value.

## Revendications

1. Dispositif pour faire fonctionner une lampe ( 930 ) à décharge à haute pression par un courant d'alimentation bipolaire et avec une absorption de puissance réglée, le dispositif comprenant un régulateur pour la formation d'une impulsion ( K1, K2 ) de courant ou de puissance proche dans le temps du passage par zéro du courant d'alimentation, **caractérisé en ce que** le régulateur ( 961 ) a une courbe caractéristique de régulation dissymétrique, de sorte qu'il réagit à un dépassement par le bas d'une valeur de consigne prescrite de la valeur absolue de l'intensité du courant d'alimentation par une contre commande plus rapide ou plus forte que dans le cas d'un dépassement par le haut de cette valeur de consigne.

2. Dispositif suivant la revendication 1, **caractérisé en ce que** le régulateur ( 961 ) est constitué sous la forme d'un régulateur PI dissymétrique.

3. Dispositif suivant la revendication 1, **caractérisé en ce que** le régulateur ( 961 ) est constitué sous la forme d'un régulateur I dissymétrique.

4. Dispositif suivant la revendication 1, **caractérisé en ce que** le régulateur ( 961 ) dissymétrique est couplé à une commande ( 905 ) à modulation par largeur d'impulsion pour la régulation en puissance de la lampe ( 930 ) à décharge à haute pression.

5. Dispositif suivant l'une ou plusieurs des revendications précédentes, **caractérisé en ce que** le dispositif comprend un onduleur ( 920 ) à pont complet ou à demi-pont, dans la branche de pont duquel la lampe ( 930) à décharge à haute pression est montée.

6. Procédé pour faire fonctionner une lampe ( 930 ) à décharge à haute pression par un courant d'alimentation bipolaire et une régulation de l'absorption de puissance, dans lequel on forme des impulsions ( K1, K2 ) de courant ou de puissance à proximité dans le temps des passages par zéro du courant d'alimentation, **caractérisé en ce qu'**on effectue la régulation de l'absorption de puissance à l'aide d'une courbe caractéristique de régulation dissymétrique, de manière à réagir à un dépassement par le bas d'une valeur de consigne prescrite de la valeur absolue de l'intensité du courant d'alimentation par une contre commande plus rapide ou plus forte que dans le cas d'un dépassement par le haut de cette valeur de consigne.
